# EUROPÄISCHE PATENTSCHRIFT

(11) **EP 2 881 293 B1**
(45) Veröffentlichungstag und Bekanntmachung des Hinweises auf die Patenterteilung: **29.03.2017**
(21) Anmeldenummer: 14196103.7
(22) Anmeldetag: 03.12.2014
(51) Int. Cl.: B62L 1/10, B60T 1/06, F16D 55/228, F16D 65/18, B62L 3/02

(54) **Hydraulische Zweiradbremseinheit**
Hydraulic brake unit for a two wheeled vehicle
Unité de freinage hydraulique pour véhicule à deux roues

(30) Priorität: 06.12.2013 DE 102013113592
(43) Veröffentlichungstag der Anmeldung: 10.06.2015
(73) Patentinhaber: Gustav Magenwirth GmbH & Co. KG, 72574 Bad Urach (DE)
(72) Erfinder: Neutsch, Christian, 72764 Reutlingen (DE)
(74) Vertreter: Hoeger, Stellrecht & Partner Patentanwälte mbB

(56) Entgegenhaltungen:
- DE-A1-102011 003 274
- US-A- 5 813 501

## Beschreibung

Die Erfindung betrifft eine hydraulische Zweiradbremseinheit umfassend auf gegenüberliegenden Seiten eines Rades an einem Zweiradrahmen montierbare Nehmerzylinderhalterungen für jeweils einen Bremsbacken tragende hydraulische Nehmerzylindereinheiten, wobei jede der Nehmerzylinder-halterungen mit einer Klemmhalterung, umfassend jeweils ein Basiselement und ein Klemmelement, und mit einem von der Klemmhalterung gehaltenen Gehäusehalteelement für ein Zylindergehäuse der jeweiligen Nehmerzylindereinheit versehen sind.

Derartige hydraulische Zweiradbremseinheiten sind aus dem Stand der Technik bekannt.

Zum Beispiel, Dokument US 5 813 501 A erkannt als naheliegender Stand der Technik offenbart die Merkmale des Oberbegriffs des Anspruchs 1.

Bei diesen hydraulischen Zweiradbremseinheiten besteht das Problem, das Zylindergehäuse relativ zum Rad einerseits einstellbar und andererseits sicher und dauerhaft zu positionieren.

Dieses Problem wird durch eine hydraulische Zweiradbremseinheit der eingangs beschriebenen Art erfindungsgemäß dadurch gelöst, dass das Gehäusehalteelement eine Einstellhülse umfasst, die eine Gehäuseaufnahme aufweist, in welcher das Zylindergehäuse gehalten ist, und die in einer von der Klemmhalterung gebildeten Hülsenaufnahme in einer zu einer Hubrichtung der Nehmerzylindereinheit parallelen Einstellrichtung bewegbar geführt ist.

Der Vorteil dieser Lösung ist darin zu sehen, dass das Zylindergehäuse durch die Einstellhülse gehalten ist und die Einstellung des Zylindergehäuses relativ zum Rad nicht durch ein Verschieben des Zylindergehäuses relativ zur Einstellhülse erfolgt, sondern die Einstellung dadurch erfolgt, dass die Einstellhülse relativ zur Klemmhalterung in verschiedenen Positionen positionierbar und in diesen unbeweglich fixierbar ist.

Der Vorteil dieser Lösung ist insbesondere auch darin zu sehen, dass damit nicht eine Relativbewegbarkeit zwischen dem Zylindergehäuse und der Einstellhülse nötig ist, um das Zylindergehäuse in einem gewünschten Abstand relativ zum Rad zu positionieren, sondern dass die Bewegbarkeit lediglich der Einstellhülse relativ zum Gehäuseelement zur Einstellung der Position des Zylindergehäuses in dem geeigneten Abstand relativ zum Rad dient.

Zur Einstellbarkeit der Einstellhülse ist es insbesondere vorteilhaft, wenn die Einstellhülse in der Hülsenaufnahme um eine zur Einstellrichtung parallele Drehachse drehbar ist.

Zweckmäßigerweise ist für eine optimale Einstellbarkeit der Einstellhülse vorgesehen, dass die Einstellhülse durch zusammenwirkende Gewindeelemente in der Einstellrichtung relativ zur Klemmhalterung bewegbar ist.

Dabei können die Gewindeelemente separate Gewindeelemente sein, die auf die Einstellhülse wirken.

Eine besonders zweckmäßige Lösung sieht jedoch vor, dass die Klemmhalterung im Bereich der Hülsenaufnahme Gewindeelemente trägt, die mit Gewindeelementen der Einstellhülse in Eingriff stehen.

Eine besonders kompakte Konstruktion sieht dabei vor, dass die Hülsenaufnahme an der Einstellhülse zugewandten Führungsflächen die Gewindeelemente trägt, so dass die Gewindeelemente unmittelbar auf die Einstellhülse im Bereich der Führungsflächen wirken können.

Vorzugsweise ist dabei ebenfalls vorgesehen, dass die Einstellhülse an einer der Klemmhalterung zugewandten Hülsenaußenseite die Gewindeelemente trägt.

Die Gewindeelemente könnten umlaufende Gewindegänge sein.

Um jedoch die Wechselwirkung zwischen der Einstellhülse und der Klemmhalterung besonders kompakt auszubilden, ist vorzugsweise vorgesehen, dass die Gewindeelemente als Gewindegangsegmente ausgebildet sind, das heißt sich lediglich so weit erstrecken, dass die begrenzte Drehbarkeit der Einstellhülse für die Wechselwirkung zwischen den Gewindegangsegmenten ausreicht.

Beispielsweise sind dann, wenn die Drehbarkeit der Gewindehülse maximal 90° beträgt, die Gewindegänge ebenfalls so ausgebildet, dass sie eine Drehbarkeit der Einstellhülse relativ zur Klemmhalterung um 90° zulassen und in allen möglichen Drehstellungen die Einstellhülse stabil relativ zur Klemmhalterung abstützen.

Mit dieser Lösung besteht somit die Möglichkeit, durch eine Verdrehung der Einstellhülse relativ zur Klemmhalterung auch die Einstellhülse in der Hubrichtung zu verschieben und somit durch diese Verdrehung der Einstellhülse auch die Position der jeweiligen Nehmerzylindereinheit relativ zum Rad in Hubrichtung der Nehmerzylindereinheit einzustellen.

Um die einmal eingestellte Position der Nehmerzylindereinheit fixieren zu können, ist vorzugsweise vorgesehen, dass mit der Klemmhalterung die Einstellhülse in der Hülsenaufnahme gegen Bewegungen relativ zu der Klemmhalterung durch Kraftschluss unbeweglich festlegbar ist.

Das heißt, dass durch Kraftschluss sowohl eine Drehbewegung der Einstellhülse um die Einstellrichtung und insbesondere damit auch eine Bewegung der Einstellhülse in der Einstellrichtung durch das unbewegliche Festlegen der Einstellhülse relativ zur Klemmhalterung verhindert werden kann.

Hinsichtlich der Ausbildung der Gehäuseaufnahme wurden bislang keine näheren Angaben gemacht.

So sieht eine vorteilhafte Lösung vor, dass das Zylindergehäuse mittels einer Gehäuseaußenfläche in der Gehäuseaufnahme der Einstellhülse gehalten ist.

Das heißt, dass das Zylindergehäuse durch die Gehäuseaußenfläche in der Gehäuseaufnahme fixiert ist.

Insbesondere ist dabei vorgesehen, dass das Zylindergehäuse mit der Gehäuseaußenfläche an einer Hülseninnenseite der Einstellhülse anliegt.

Um bei einer Drehung der Einstellhülse relativ zur Klemmhalterung die Ausrichtung der Nehmerzylindereinheit und insbesondere des Zylindergehäuses der Nehmerzylindereinheit in tangentialer Richtung zum Rad aufrecht erhalten und gegebenenfalls einstellen zu können, ist vorzugsweise vorgesehen, dass das Zylindergehäuse in der Gehäuseaufnahme relativ zur Einstellhülse zumindest drehbar gehalten ist.

Insbesondere ist dabei das Zylindergehäuse mit seiner Gehäuseaußenfläche relativ zur Hülseninnenseite der Einstellhülse um eine zur Hubrichtung parallele Achse drehbar, insbesondere um eine zur Drehachse der Einstellhülse koaxiale Achse drehbar.

Damit diese einmal gewählte Ausrichtung des Zylindergehäuses relativ zur Einstellhülse fixiert werden kann ist vorzugsweise vorgesehen, dass das Zylindergehäuse in der Gehäuseaufnahme der Einstellhülse durch die auf die Einstellhülse wirkende Klemmhalterung durch Kraftschluss unbeweglich festlegbar ist.

Um eine kraftschlüssige Fixierung des Zylindergehäuses relativ zur Einstellhülse zu erhalten, ist vorzugsweise vorgesehen, dass die Einstellhülse eine geschlitzte Hülse ist.

Beispielsweise ist dabei die Einstellhülse so ausgebildet, dass sie ein Basissegment aufweist, an welcher sich zum Schlitz hin erstreckende Bogensegmente anschließen.

Um eine Beweglichkeit der Bogensegmente relativ zum Basissegment zu verbessern ist vorzugsweise vorgesehen, dass zwischen dem Basissegment und den Bogensegmenten Eintiefungen vorgesehen sind, so dass durch die Eintiefung und somit durch die Reduzierung der Wanddicke der Einstellhülse die Flexibilität der Beweglichkeit der Bogensegmente relativ zum Basissegment verbessert wird, um die Aufnahme des Zylindergehäuses durch die Einstellhülse zu erleichtern.

Eine ebenfalls die Aufnahme des Zylindergehäuses erläuternde Lösung sieht vor, die Einstellhülse mehrteilig, beispielsweise aus zwei Hälften, auszubilden, die sich so zusammensetzen lassen, dass sie im zusammengesetzten Zustand das Zylindergehäuse aufnehmen.

Um ferner eine Fixierung, insbesondere eine kraftschlüssige Fixierung des Zylindergehäuses relativ zur Einstellhülse zu erreichen ,ist vorzugsweise vorgesehen, dass die Einstellhülse auf ihrer Hülseninnenseite mindestens einen Wulst aufweist, welcher insbesondere dann an dem Zylindergehäuse beim Klemmen des Zylindergehäuses durch die Einstellhülse durch Deformation und/oder Setzen des Materials des Wulstes unter Formanpassung anlegbar ist.

Um die Einstellhülse in einfacher Weise verdrehen zu können, ist vorzugsweise vorgesehen, dass die Einstellhülse einen Griffnocken aufweist.

Der Griffnocken ist dabei zweckmäßigerweise an das Basissegment angeformt.

Um ferner das Zylindergehäuse relativ zur Einstellhülse, insbesondere gegen Bewegungen in der Einstellrichtung, stabil positionieren zu können, ist vorzugsweise vorgesehen, dass die Einstellhülse eine Stirnseite aufweist, an welcher sich das Zylindergehäuse abstützt.

Das Zylindergehäuse kann dabei in unterschiedlichster Art und Weise ausgebildet sein, um die Abstützung an der Stirnseite der Einstellhülse zu erreichen.

Vorzugweise ist das Zylindergehäuse mit einem Stützelement versehen, welches sich an der Stirnseite der Einstellhülse abstützt.

Das Stützelement kann dabei ein separates, mit dem Zylindergehäuse verbundenes Element sein.

Eine besonders günstige Lösung sieht vor, dass das Stützelement einstückig an das Zylindergehäuse angeformt ist.

Eine besonders einfache Lösung ist dabei so ausgebildet, dass das Stützelement durch eine Bremsbackenführung des Zylindergehäuses gebildet ist.

Um die Einstellhülse so relativ zu dem Zylindergehäuse positionieren zu können, dass das Zylindergehäuse mit der Einstellhülse verbunden bleibt, ist vorzugsweise vorgesehen, dass die Einstellhülse zwischen dem Stützelement des Zylindergehäuses und einem Anschlussabschnitt des Zylindergehäuses für eine Bremsleitung angeordnet ist, wobei sowohl das Stützelement als auch der Anschlussabschnitt für die Bremsleitung die Bewegung der Einstellhülse relativ zum Zylindergehäuse begrenzen.

Vorzugsweise liegt dabei die Einstellhülse, wie bereits beschrieben, mit einer Stirnseite an dem Stützelement an und mit einer gegenüberliegenden Stirnseite an dem Anschlussabschnitt für die Bremsleitung, so dass durch diese beiden Bereiche des Zylindergehäuses die Einstellhülse gegen eine Bewegung relativ zum Zylindergehäuse in der Einstellrichtung fixiert ist.

Insbesondere dient bei der erfindungsgemäßen Lösung die Klemmhalterung dazu, dass mit dieser eine Klemmkraft auf die Einstellhülse wirkt, welche die Einstellhülse gegen eine Bewegung relativ zur Klemmhalterung kraftschlüssig fixiert.

Ferner ist vorzugsweise vorgesehen, dass die Einstellhülse mit einer Klemmkraft auf das Zylindergehäuse wirkt, welche eine Relativbewegung des Zylindergehäuses zur Einstellhülse verhindert.

Hinsichtlich der Ausbildung der Einstellhülse wurden im Zusammenhang mit den bislang beschriebenen Ausführungsbeispielen keine näheren Angaben gemacht.

Prinzipiell könnte die Einstellhülse aus einer Vielzahl von unterschiedlichsten Materialien hergestellt sein.

Eine besonders vorteilhafte Lösung sieht dabei vor, dass die Einstellhülse aus Kunststoff hergestellt ist.

Insbesondere ist der Kunststoff dabei ein fasergefüllter Kunststoff, vorzugsweise ein glasfaserverstärktes Polyamid.

Ein derartiger Kunststoff ist ferner vorzugsweise so ausgebildet, dass dieser ein durch Setzung deformierbarer Kunststoff ist, so dass bei Einwirkung der Klemmkräfte zur kraftschlüssigen Fixierung der Einstellhülse relativ zur Klemmhalterung und/oder zur kraftschlüssigen Fixierung der Einstellhülse relativ zum

Zylindergehäuse Setzungserscheinungen im Bereich des Materials der Einstellhülse auftreten, die eine reine kraftschlüssige Verbindung zwischen den Oberflächen zumindest teilweise zu einer partiell formschlüssigen Verbindung werden lassen, da sich durch Setzungserscheinungen die Oberflächen der Einstellhülse an die Oberflächen des Zylindergehäuses und gegebenenfalls der Klemmhalterung anpassen.

Um die kraftschlüssige Fixierung der Einstellhülse in der Klemmhalterung möglichst dauerhaft zu gestalten, ist vorzugsweise vorgesehen, dass die Einstellhülse der Klemmhalterung zugewandte raue Flächen aufweist.

Ferner ist ebenfalls zweckmäßigerweise vorgesehen, dass die Klemmhalterung der Einstellhülse zugewandte raue Flächen aufweist.

Hinsichtlich der Ausbildung der Klemmhalterung wurden im Zusammenhang mit der bisherigen Erläuterung der einzelnen Ansprüche keine näheren Angaben gemacht.

So sieht eine vorteilhafte Lösung vor, dass das Basiselement und das Klemmelement der Klemmhalterung auf einer Seite der Einstellhülse mit Formschlusselementen ineinandergreifen und auf einer den Formschlusselementen gegenüberliegenden Seite durch eine Klemmschraube aufeinander zu bewegbar sind, um die Einstellhülse mit einer Klemmkraft zu beaufschlagen.

Dabei kann die Klemmhalterung selbst aus unterschiedlichsten Materialien hergestellt sein.

So sieht eine Lösung vor, dass die Klemmhalterung aus Metall, insbesondere aus Aluminium, vorzugsweise aus Aluminiumdruckguss, hergestellt ist.

Eine andere vorteilhafte Lösung sieht vor, dass die Klemmhalterung aus Kunststoff hergestellt ist.

Dabei ist der Kunststoff vorzugsweise ein fasergefüllter Kunststoff, insbesondere ein glasfasergefülltes Polyamid.

Alternativ zum Vorsehen des Klemmelements und des Basiselements entweder aus Metall oder Kunststoff sieht eine weitere Lösung vor, dass eines der Elemente der Klemmhalterung aus Metall und das andere der Elemente der Klemmhalterung aus Kunststoff hergestellt ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Draufsicht auf eine erfindungsgemäße Zweiradbremseinheit, montiert an einer Radgabel eines Zweiradrahmens;
- Fig. 2: einen Schnitt längs Linie 2-2 in Fig. 1;
- Fig. 3: eine Ansicht in Richtung des Pfeils A in Fig. 1;
- Fig. 4: einen Schnitt längs Linie 4-4 in Fig. 1;
- Fig. 5: eine Darstellung einer erfindungsgemäßen Nehmerzylinderhalterung ohne die Nehmerzylindereinheit in Richtung des Pfeils A in Fig. 1;
- Fig. 6: eine Ansicht der Nehmerzylinderhalterung in Richtung des Pfeils B in Fig. 5;
- Fig. 7: eine Draufsicht auf die Nehmerzylinderhalterung in Richtung des Pfeils C in Fig. 6;
- Fig. 8: eine perspektivische Darstellung der Nehmerzylinderhalterung ähnlich Fig. 5;
- Fig. 9: eine Darstellung einer Klemmhalterung der Nehmerzylinderhalterung in Explosionsdarstellung und gekippt;
- Fig. 10: eine perspektivische Darstellung der Einstellhülse;
- Fig. 11: eine Draufsicht in Richtung des Pfeils D in Fig. 10;
- Fig. 12: eine Draufsicht auf die Einstellhülse in Richtung des Pfeils E in Fig. 11;
- Fig. 13: eine Draufsicht auf eine Variante der Einstellhülse einer Variante der Zweiradbremseinheit in Richtung des Pfeils F in Fig. 12;
- Fig. 14: eine Seitenansicht eines Zylindergehäuses der Nehmerzylindereinheit mit einer diese aufnehmenden aufgeschnittenen Einstellhülse und
- Fig. 15: eine perspektivische Ansicht eines Basisteils und einer Einstellhülse bei einer weiteren Variante der Zweiradbremseinheit.

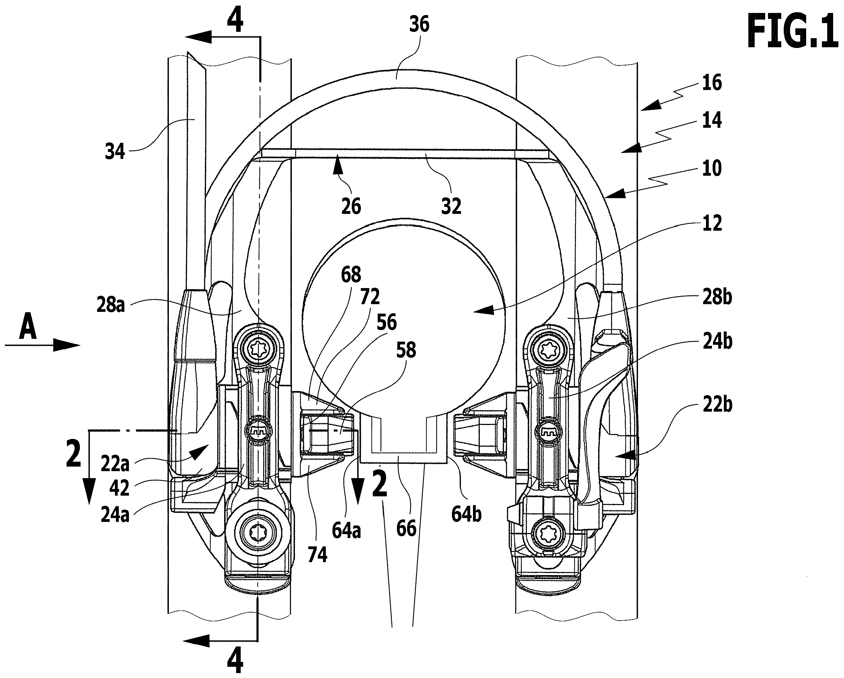

Ein Ausführungsbeispiel einer in Fig. 1 als Ganzes mit 10 bezeichneten Zweiradbremseinheit zur Montage an einer ein Rad 12 eines Zweirads aufnehmenden Radgabel 14 eines Zweiradrahmens 16 oder am Zweiradrahmen 16 selbst umfasst auf einander gegenüberliegenden Seiten des Rades 12 angeordnete Nehmerzylindereinheiten 22a, 22b, die jeweils in Nehmerzylinderhalterungen 24a, 24b gehalten sind, wobei die Nehmerzylinderhalterungen 24 an der jeweiligen Radgabel 14 montierbar sind und beispielsweise durch eine umgekehrt U-förmige Montageplatte 26 relativ zueinander ausgerichtet gehalten sind, wobei die Montageplatte 26 auf gegenüberliegenden Seiten des Rades 12 angeordnete Seitenschenkel 28a, 28b aufweist, die durch einen gemeinsamen Mittelsteg 32 miteinander verbunden sind.

Die Nehmerzylindereinheiten 22a und 22b sind dabei hydraulisch betätigbar, wobei von einem zeichnerisch nicht dargestellten Geberzylinder eine Hydraulikleitung 34 zu einer der Nehmerzylindereinheiten, beispielsweise der Nehmerzylindereinheit 22a, führt und von dieser führt eine Hydraulikverbindungsleitung 36 zur jeweils anderen Nehmerzylindereinheit, in diesem Fall der Nehmerzylindereinheit 22b.

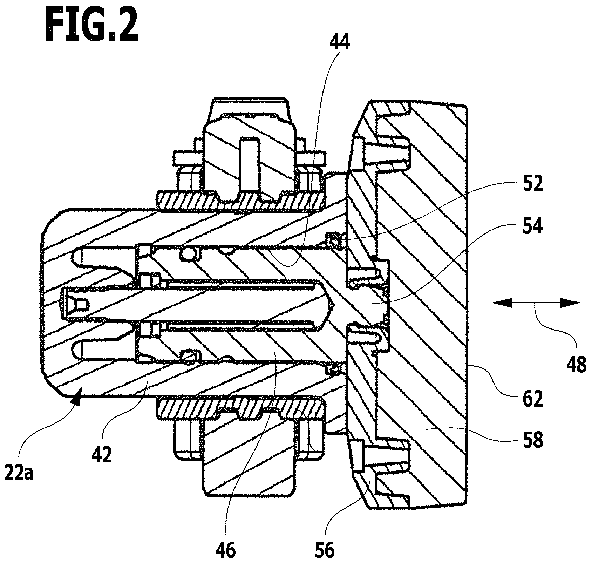

Wie in Fig. 1 und 2 dargestellt, umfasst jede der Nehmerzylindereinheiten 22, in diesem Fall die dargestellte Nehmerzylindereinheit 22a, ein Zylindergehäuse 42,welches eine Zylinderkammer 44 umschließt, in welcher ein Kolben 46 in einer Hubrichtung 48 verschiebbar geführt ist, wobei der Kolben 46 sich aus einer Öffnung 52 des Zylindergehäuses 42 heraus erstreckt und an einem über das Zylindergehäuse 42 überstehenden Kopf 54 einen Bremsbackenträger 56 aufweist, an dem ein Bremsbacken 58 gehalten ist, welcher mit einer dem Bremsbackenträger 56 abgewandten und quer zur Hubrichtung 48 des Kolbens 46 und somit des Bremsbackens 58 verlaufenden Frontseite 62 an einer dem Bremsbacken 58 zugewandten Felgenflanke 64 einer Felge 66 des Rades 12 anlegbar ist.

Dabei ist, wie in Fig. 1 dargestellt, der Bremsbackenträger 56 mit dem Bremsbacken 58 in einer an dem Zylindergehäuse 42 gehaltenen Bremsbackenführung 68 geführt, die beispielsweise den jeweiligen Bremsbackenträger 56 mit dem Bremsbacken 58 zwischen sich aufnehmende Führungsfinger 72, 74 aufweist, durch welche die eindeutige Ausrichtung des Bremsbackenträgers 56 mit dem Bremsbacken 58 relativ zum Zylindergehäuse 42 festgelegt ist und eine Drehbewegung um eine zur Hubrichtung 48 parallele Drehachse relativ zum Zylindergehäuse 42 verhindert wird.

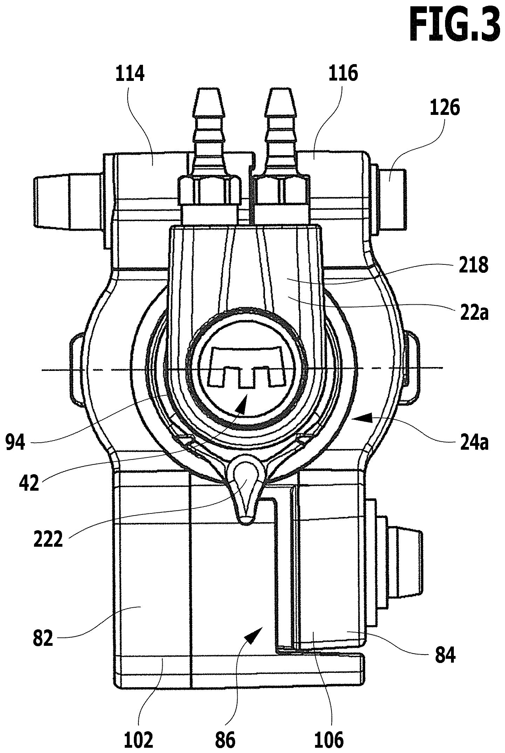

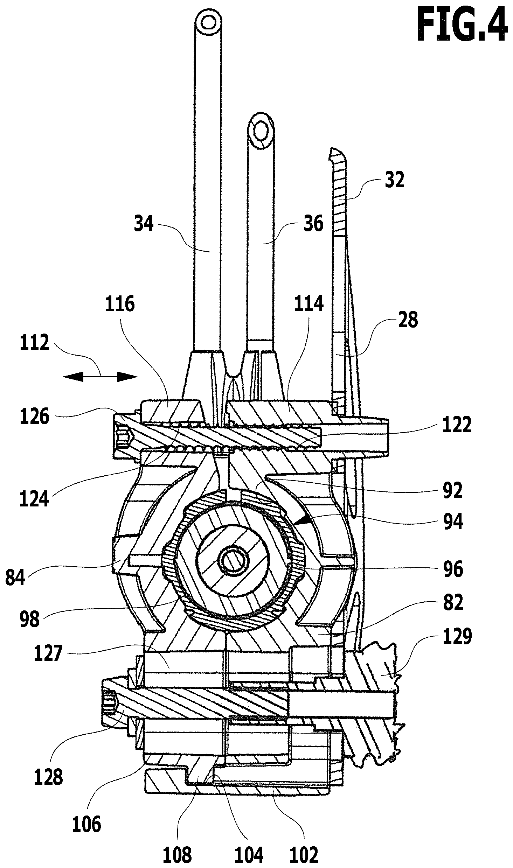

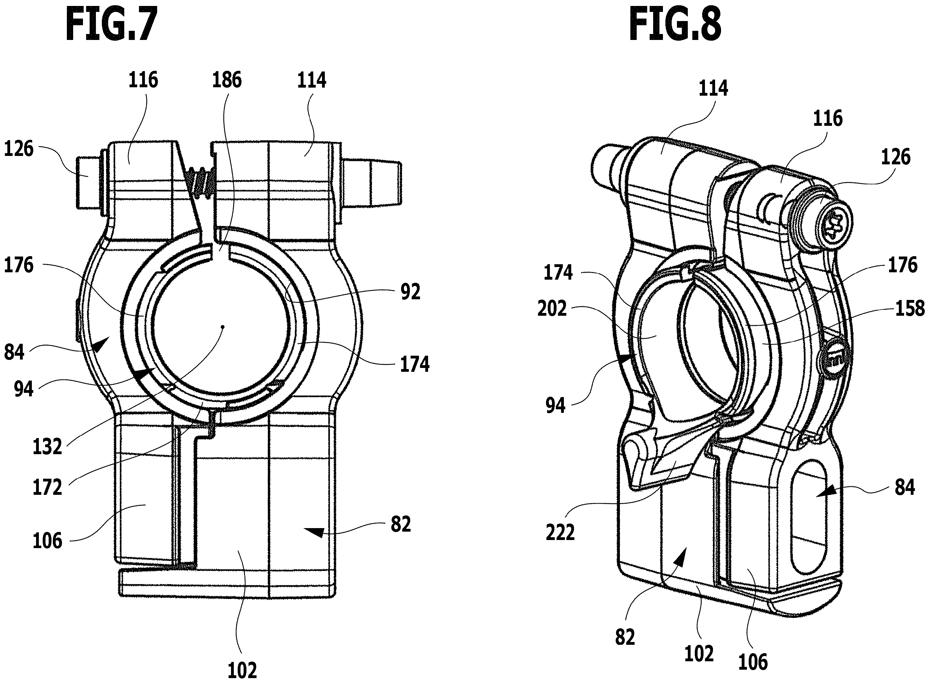

Zur Aufnahme der Nehmerzylindereinheiten 22a oder 22b, im Fall der Fig. 3 bis 9 der Nehmerzylindereinheit 22a, umfasst die als Ganzes mit 24 bezeichnete Nehmerzylinderhalterung, beispielsweise die Nehmerzylinderhalterung 24a in Fig. 3, ein Basiselement 82, und ein Klemmelement 84, die zusammen eine als Ganzes mit 86 bezeichnete Klemmhalterung bilden.

Dabei umschließt die Klemmhalterung 86 eine als Ganzes mit 92 bezeichnete Hülsenaufnahme für eine von der jeweiligen Nehmerzylinderhalterung 24a, 24b, umfasste Einstellhülse 94, wobei die Hülsenaufnahme 92 einen im Basiselement 82 liegenden Teilabschnitt 96 und einen im Klemmelement 84 liegenden Teilabschnitt 98 aufweist, die sich beide zu der Hülsenaufnahme 92 für die Einstellhülse 94 ergänzen.

Allerdings ist das Klemmelement 84 relativ zum Basiselement 82 derart bewegbar, dass beim Bewegen des Klemmelements 84 auf das Basiselement 82 zu ein Verengen der Hülsenaufnahme 92 zum Einklemmen der Einstellhülse 94 möglich ist oder beim Bewegen des Klemmelements 84 vom Basiselement 82 weg ein Erweitern der Hülsenaufnahme 92 zur Bewegungsfreigabe der Einstellhülse 94 möglich ist.

Hierzu ist ein auf einer Seite der Hülsenaufnahme 92 liegender Verbindungsabschnitt 102 des Basiselements 82 mit einer Aufnahme 104 versehen, in welche ein auf derselben Seite liegender Verbindungsabschnitt 106 des Klemmelements 84 mit einer Nase 108 eintaucht, so dass dadurch die Verbindungsabschnitte 102 und 106 des Basiselements 82 und des Klemmelements 84 formschlüssig miteinander verbindbar sind, wobei das Klemmelement 84 dabei eine Kippbewegung in einer Kipprichtung 112 um die formschlüssige Verbindung, gebildet durch die Aufnahme 104 und die Nase 108, ausführen kann, um die Hülsenaufnahme 92 zu vergrößern oder zu verkleinern.

Auf einer der Hülsenaufnahme 92 gegenüberliegenden Seite sind das Basiselement 82 und das Klemmelement 84 ebenfalls mit Verbindungsabschnitten 114 bzw. 116 versehen, die durch eine in Durchbrüche 122 und 124 in diesen Verbindungsabschnitten 114 und 116 eingreifende Klemmschraube 126 verbindbar sind, wobei die Verbindungsabschnitte 114 und 116 beim Anziehen dieser Klemmschraube 126 aufeinander zu bewegbar oder beim Lösen der Klemmschraube 126 voneinander weg bewegbar sind.

Eine Befestigungsschraube 128 durchgreift einen Durchbruch 127 der Klemmhalterung 86 und ist in eine Haltehülse 129 der Radgabel 14 oder des Zweiradrahmens 16 eingeschraubt, wobei der Durchbruch 127 so ausgebildet ist, dass die jeweilige Klemmhalterung 86 relativ zur Haltehülse 129 höhenverstellbar ist, um die Bremsbacken 58 relativ zu den Felgenflanken 64a, 64b positionieren zu können, und zwar so, dass die Bremsbacken 58 mit den Frontseiten 62 möglichst vollflächig an den Felgenflanken 64a, 64b anliegen.

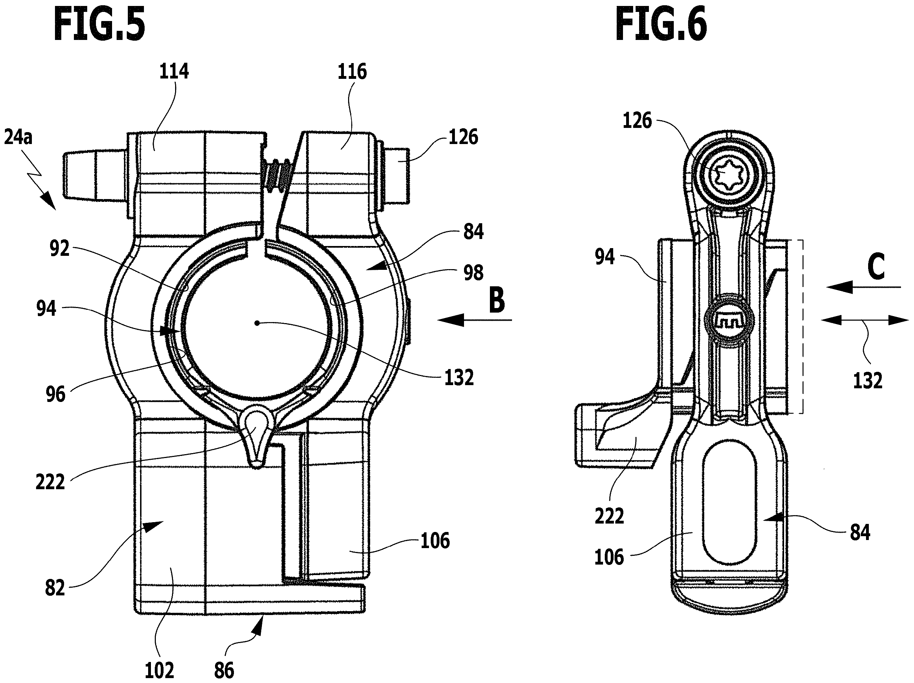

Wie in den Figuren 5 bis 8 dargestellt, soll die Einstellhülse 94 in der Hülsenaufnahme 92 der Klemmhalterung 86 um eine Mittelachse 132 drehbar und längs der Mittelachse 132 verschiebbar sein, um - wie nachfolgend im Detail beschrieben - die Position der jeweiligen Nehmerzylindereinheit 22 relativ zur jeweiligen Felgenflanke 64 einstellen zu können.

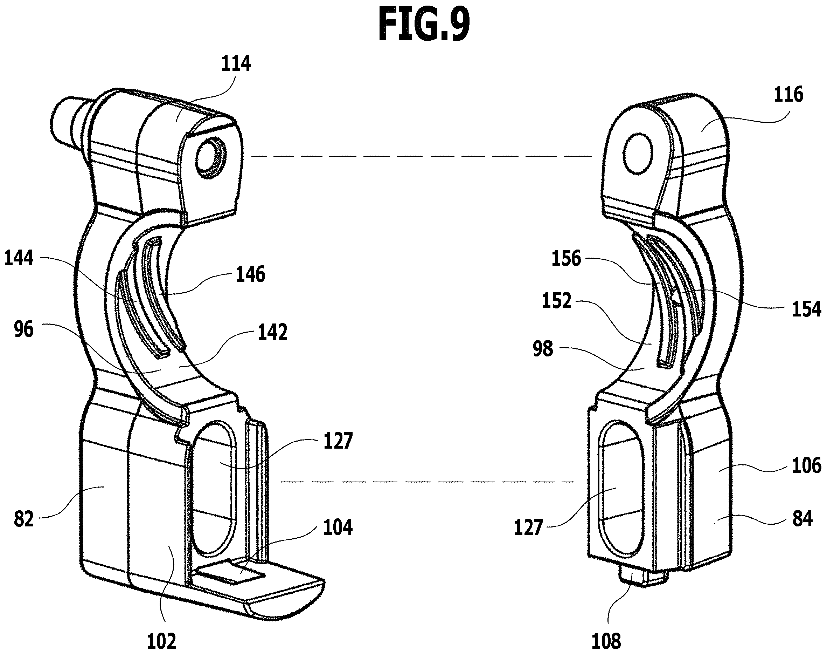

Hierzu umfasst, wie in Figur 9 dargestellt, der Teilabschnitt 96 der Hülsenaufnahme 92, der in dem Basiselement 82 vorgesehen ist, eine zur Achse 132 zylindrisch verlaufende Führungsfläche 142 sowie auf der Führungsfläche vorgesehene und über diese radial in Richtung der Achse 132 als Rippen überstehende Gewindesegmente 144 und 146, die sich über ein Teilbogensegment der Führungsfläche 142 erstrecken.

Ferner umfasst der Teilabschnitt 98 der Hülsenaufnahme 92 ebenfalls eine Führungsfläche 152 und auf der Führungsfläche 152 angeordnete und als Rippen über diese überstehende Gewindesegmente 154 und 156, die sich ebenfalls über ein Teilbogensegment der Führungsfläche 152 erstrecken.

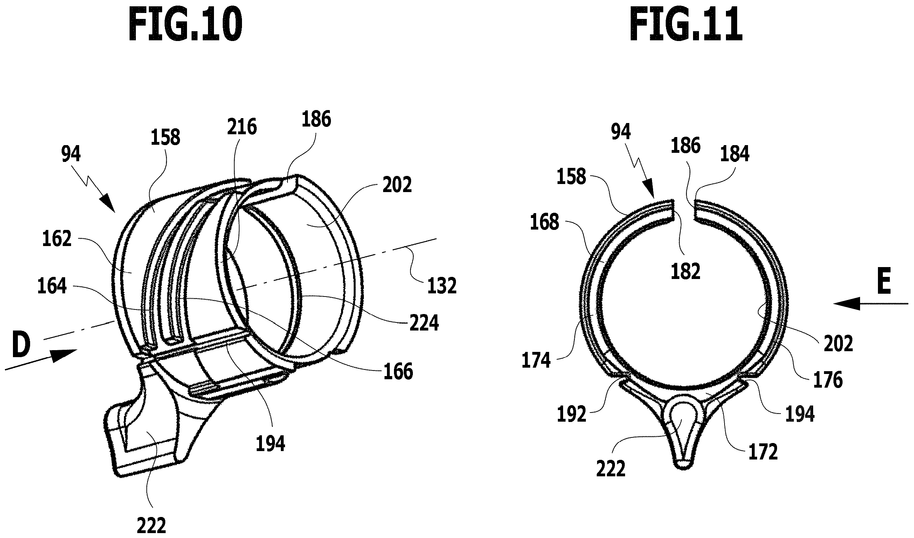

Durch die Führungsflächen 142 und 152, die ihrerseits jeweils im Wesentlichen in einer geometrischen Zylinderfläche zur Achse 132 verlaufen, erfolgt eine drehbare Führung der Einstellhülse 94, die in verschiedenen Ansichten in den Figuren 10 bis 13 dargestellt ist.

Die Einstellhülse 94, separat dargestellt in Fig. 10 bis 12, ist ihrerseits auf einer Hülsenaußenseite 158 mit einer zylindrisch zur Achse 132 verlaufenden Stützfläche 162 versehen, von welcher ausgehend sich als Gewindenutsegmente ausgebildete Gewindesegmente 164,166 in eine die Stützfläche 162 tragende Hülsenwand 168 hineinerstrecken, wobei die Gewindenutsegmente 164, 166 so ausgebildet sind, dass die Gewindesegmente 144, 146 sowie 154, 156 in diese eingreifen können, wenn die Einstellhülse 94 mit ihrer Stützfläche 162 an den Führungsflächen 142, 152 der Teilabschnitte 96, 98 der Hülsenaufnahme 92 anliegt.

Durch eine Drehung der Einstellhülse 94 um die Achse 132 besteht somit nicht nur die Möglichkeit, die Hülse 94 um die Achse 132 zu drehen, sondern dadurch, dass die Gewindesegmente 144, 146 sowie 154, 156 in Eingriff mit den Gewindenutsegmenten 164, 166 stehen, die Einstellhülse 94 in Richtung der Achse 132 zu verschieben.

Insbesondere in Fig. 10 und 11 dargestellt, ist die Einstellhülse 94 vorzugsweise als geschlitzte Hülse ausgebildet und umfasst ein Basissegment 172, von welchem ausgehend sich jeweils die Stützfläche 162 und die Gewindenutsegmente 164, 166 aufweisende Bogensegmente 174 und 176 erstrecken, deren Bogenenden 182 und 184 in einem Abstand voneinander angeordnet sind und somit einen Schlitz 186 bilden, der zwischen den Bogenelementen 182 und 184 liegt.

Beispielsweise sind die Stützflächen 162 und die Führungsflächen 142, 152 als raue Oberflächen ausgeführt um bei Klemmwirkung der der Klemmhalterung 86 einen optimalen Kraftschluss zu erhalten.

Um ferner die Bogensegmente 174 und 176 zum Verbringen der Einstellhülse 94 in eine das Zylindergehäuse 42 aufnehmende Position mit möglichst großer Elastizität relativ zu dem Basissegment 172 bewegen zu können, sind zwischen dem Basissegment 172 und den Bogensegmenten 174 und 176 noch die jeweilige Hülsenwand 168 in ihrer Dicke reduzierende Eintiefungen 192, 194 vorgesehen, so dass sich die Bogensegmente 174 und 176 insbesondere unter Aufweitung des Schlitzes 186 und somit Vergrößerung des Abstands der Bogenenden 182 und 184 spreizen oder auch zusammendrücken lassen, so lange, bis die Bogenenden 182 und 184 aneinander anliegen.

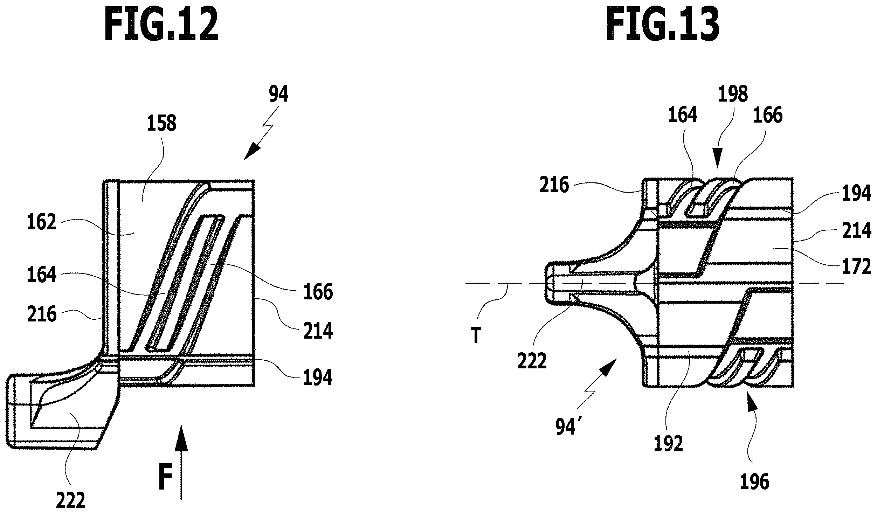

Alternativ zu den elastisch relativ zum Basissegment 172 bewegbaren Bogensegmenten 174, 176 ist gemäß einer Variante der Einstellhülse 94' vorgesehen, die Einstellhülse 94' aus zwei zusammensetzbaren und miteinander verbindbaren Hälften 196, 198 herzustellen, wie in Fig. 13 dargestellt, die so zusammengesetzt und beispielsweise durch Steck- oder Rastelemente verbunden werden, dass sie das Zylindergehäuse 42 in ihrer verbundenen Stellung umfassen und aufnehmen.

Beispielsweise umfasst jede der durch eine Trennebene T getrennten Hälften 196, 198 eines der Bogensegmente 174, 176 und eine Hälfte des Basissegmentes 172, wie in Fig. 13 dargestellt.

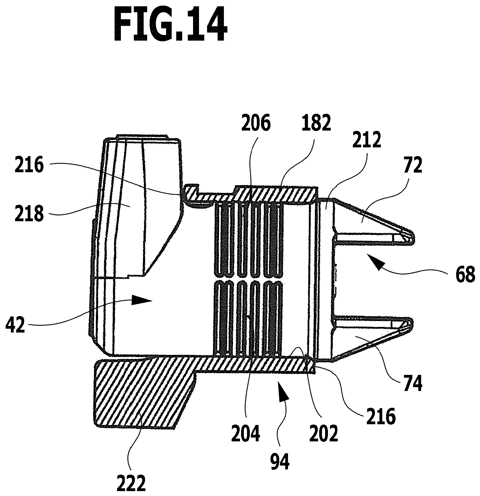

Die Einstellhülse 94 liegt, wie insbesondere in Fig. 14 dargestellt, mit einer der Hülsenaußenseite 158 gegenüberliegenden Hülseninnenseite 202 an einer Gehäuseaußenfläche 204 des Zylindergehäuses 42 an, wobei die Gehäuseaußenfläche eine zur Achse 132 zylindrische Fläche sein kann oder mit einer Rillenstruktur 206 versehen sein kann.

Das Zylindergehäuse 42 wird jedoch nicht lediglich über die Gehäuseaußenfläche 204 von der Einstellhülse 94 gehalten, sondern das Zylindergehäuse 42 stützt sich außerdem mit einem um die Öffnung 52 herum verlaufenden Flansch 208, welcher auch die Bremsbackenführungsfinger 72 und 74 der jeweiligen Bremsbackenführung 68 trägt, an einer Stirnseite 214 der Führungshülse 94 ab.

Ferner ist die Einstellhülse 94 gegen eine Bewegung in Richtung der Achse 132 relativ zum Zylindergehäuse 42 dadurch fixiert, dass diese mit einer der Stirnseite 214 gegenüberliegenden Stirnseite 216 an einem über die Gehäuseaußenfläche 204 überstehenden Anschlussabschnitt 218 des Zylindergehäuses 42 anliegt und somit zwischen dem Anschlussabschnitt 218 und dem Flansch 212 gegen eine Bewegung relativ zum Zylindergehäuse in Richtung der Achse 132 fixiert ist.

Zum Verdrehen der Einstellhülse 94 ist diese vorzugsweise noch mit einem Griffnocken 222 versehen, welcher ausgehend von dem Basissegment 172 sich über die Stirnfläche 216 hinaus von dem Basissegment 172 weg erstreckt und somit für ein Angreifen durch eine Bedienungsperson zum Verdrehen der Einstellhülse 94 zugänglich ist.

Vorzugsweise ist das Zylindergehäuse 42, insbesondere im Bereich seines Anschlussabschnitts 218, derart ausgebildet, dass der Griffnocken 222 ausgehend von einer in Fig. 3 dargestellten Mittelstellung um einen Winkel von bis zu plus/minus 45° verdreht werden kann, um mit der Einstellhülse 94 die Position der jeweiligen Nehmerzylindereinheit 22 relativ zur Nehmerzylinderhalterung 24, insbesondere relativ zu der Klemmhalterung 86 einzustellen, die ihrerseits an der jeweiligen Radgabel 14 fixiert ist.

Die Ausrichtung jeder der Nehmerzylindereinheiten 22 mit ihrer Bremsbacke 58 relativ zu der entsprechenden vom Bremsbacken 58 zu beaufschlagenden Felgenflanke 64 erfolgt dadurch, dass bei gelöster Klemmhalterung 86, das heißt bei gelöster Klemmschraube 26, einerseits eine Verdrehung des Zylindergehäuses 42 relativ zu der Einstellhülse 94 so erfolgt, das der jeweilige Bremsbacken 88 tangential zur entsprechenden jeweiligen Felgenflanke 64 ausgerichtet ist.

Dann erfolgt durch Angreifen am Griffnocken 141 und Verdrehen der Einstellhülse 94 relativ zum Zylindergehäuse 42 und relativ zur Klemmhalterung 86 ein Verstellen des Abstandes des Bremsbackens 58 der jeweiligen Nehmerzylindereinheit 22 relativ zur Felgenflanke 64, so dass der gewünschte Abstand zwischen dem jeweiligen Bremsbacken 58 und der Felgenflanke 64 vorliegt.

In dieser Stellung der Einstellhülse 94 und in dieser Ausrichtung des Zylindergehäuses 42 mit dem jeweiligen Bremsbacken 58 erfolgt ein Festziehen der Klemmschraube 126, welches dazu führt, dass das Klemmelement 84 relativ zum Basiselement 82 verkippt wird und sich der Teilabschnitt 98 im Klemmelement 84 sich in Richtung des Teilabschnitts 96 im Basiselement 82 bewegt und somit die Hülsenaufnahme 92 verengt, so dass eine Beaufschlagung der Einstellhülse 94 erfolgt, wodurch sich die Bogensegmente 174 und 176 relativ zum Basissegment 172 der Einstellhülse bewegen und sich dabei die Bogenenden 182 und 184 unter Verengung des Schlitzes 186 aufeinander zu bewegen, so dass ein Einklemmen des Zylindergehäuses 42 im Bereich seiner Gehäuseaußenfläche 204 durch das Basissegment 172 sowie die Bogensegmente 174 und 176 erfolgt.

Somit führt das Eindrehen der Klemmschraube 126 zu einem Klemmen der Einstellhülse 94 durch die Klemmhalterung 86 und gleichzeitig zu einem Einklemmen des Zylindergehäuses 42 im Bereich der Gehäuseaußenfläche 204 durch die Einstellhülse 94, so dass das Zylindergehäuse 42 nicht mehr relativ zur Einstellhülse 94 verdrehbar ist und andererseits die Einstellhülse 94 nicht mehr relativ zur Klemmhalterung 86 verdrehbar ist, so dass somit eine Festlegung der Ausrichtung des Zylindergehäuses 42 und somit einer Ausrichtung der Bremsbackens 58 hinsichtlich des tangentialen Verlaufs desselben als auch des Abstand von der jeweiligen Felgenflanke 64, dauerhaft fixiert werden kann.

Insbesondere ist bei der erfindungsgemäßen Zweiradbremseinheit 10 die Einstellhülse 94 aus Kunststoff ausgebildet, dass das Einklemmen der Einstellhülse 94 durch die Klemmhalterung 86 und das somit auch erfolgende klemmende Anlagen der Einstellhülse 94 an der Außenfläche 204 des Zylindergehäuses 42 Setzungserscheinungen im Material der Einstellhülse 64 bewirkt, so dass sich dieses gegebenenfalls an Oberflächenstrukturen des Zylindergehäuses 42 im Bereich der Gehäuseaußenfläche 204 anpasst und dadurch noch zu einer dauerhafteren Fixierung des Zylindergehäuses 42 in der Einstellhülse 94 führt, da dadurch zumindest partiell durch diese Setzungserscheinungen ein Formschluss entsteht.

Um gegebenenfalls noch diese Anpassung und die dadurch bedingten Setzungserscheinungen des Materials der Einstellhülse 94 lokal definiert eintreten zu lassen, ist beispielsweise die Einstellhülse 94 auf ihrer Hülseninnenseite 202 mit radial zur Achse 132 oder gegebenenfalls auch parallel zur Achse 132 verlaufenden Wulsten 224 versehen, im Bereich derer dann beim Zudrehen der Klemmschraube 126 und Klemmen der Einstellhülse 94 durch die Klemmhalterung 86 Setzungserscheinungen durch Anpassung des Wulstes 224 an die Struktur der Außenfläche 204 auftritt.

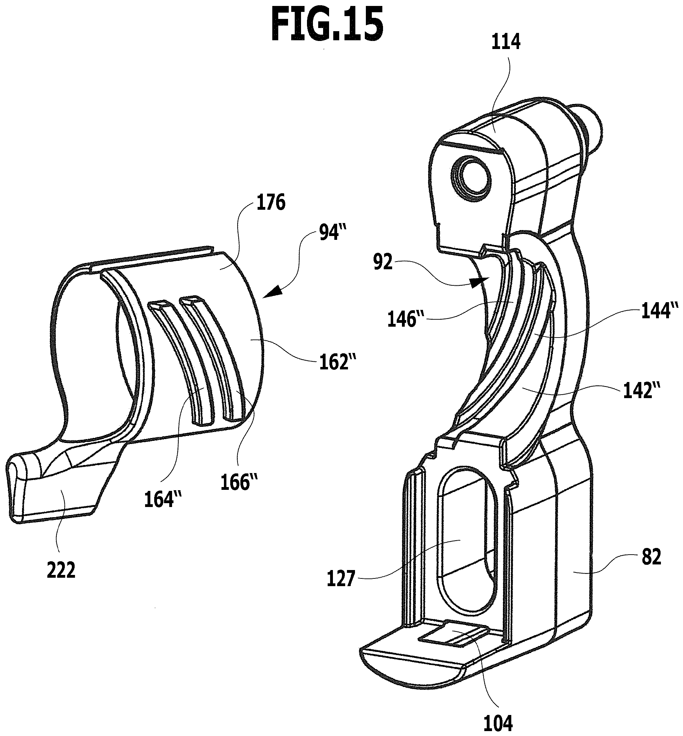

Bei einer weiteren Variante der Zweiradbremseinheit 10", dargestellt in Fig. 15, sind die Gewindesegmente 144" und 146" des Basiselements 82 und auch des nicht dargestellten Klemmelements 84 als Gewindenutsegmente ausgebildet und außerdem die Gewindesegmente 164", 166" der Einstellhülse 94" als über die Stützfläche 162" radial zur Achse 132 nach außen überstehende Rippen, die im zusammenwirkenden Zustand in die Gewindenutsegmente 144", 146" eingreifen.

Im Übrigen ist diese Variante der Zweiradbremseinheit 10" in gleicher Weise ausgebildet wie die voranstehend beschriebene Zweiradbremseinheit 10, so dass auf die Ausführungen zu dieser vollinhaltlich Bezug genommen wird.

Bei der Ausbildung der erfindungsgemäßen Zweiradbremseinheit 10 wurde hinsichtlich des Materials der Klemmhalterung 86, insbesondere des Basiselements 82 und des Klemmelements 84, keine näheren Angaben gemacht. So besteht beispielsweise die Möglichkeit, sowohl das Basiselement 82 als auch das Klemmelement 84 aus Metall, insbesondere Aluminiumdruckguss, herzustellen.

Es besteht aber auch die Möglichkeit, eines der beiden, das heißt entweder das Basiselement 82 oder das Klemmelement 84, aus Kunststoff herzustellen und das jeweils andere aus Aluminiumdruckguss.

Bei einer besonders kostengünstigen Ausführungsform besteht die Möglichkeit, sowohl das Basiselement 82 als auch das Klemmelement 84 aus Kunststoff herzustellen.

Als Kunststoff kommt dabei insbesondere sowohl bei dem Basiselement 82 als auch dem Klemmelement 84 sowie der Einstellhülse 94 ein glasfaserverstärktes Polyamid zum Einsatz.

## Patentansprüche

1. Hydraulische Zweiradbremseinheit (10) umfassend auf gegenüberliegenden Seiten eines Rades (12) an einem Zweiradrahmen (16) montierbare Nehmerzylinderhalterungen (24) für jeweils einen Bremsbacken tragende hydraulische Nehmerzylindereinheiten (22), wobei jede der Nehmerzylinderhalterungen (24) mit einer Klemmhalterung (86), umfassend jeweils ein Basiselement (82) und ein Klemmelement (84), und mit einem von der Klemmhalterung (86) gehaltenen Gehäusehalteelement (94) für ein Zylindergehäuse (42) der jeweiligen Nehmerzylindereinheit (22) versehen sind, wobei das Gehäusehalte-element (94) eine Einstellhülse (94) umfasst, die eine Gehäuseaufnahme (202, 214, 216) aufweist, in welcher das Zylindergehäuse (42) gehalten ist, und die in einer von der Klemmhalterung (86) gebildeten Hülsenaufnahme (92) in einer zu einer Hubrichtung (48) der Nehmerzylindereinheit (22) parallelen Einstellrichtung (132) bewegbar geführt ist, **dadurch gekennzeichnet, dass** die Einstellhülse (94) eine Stirnseite (214) aufweist, an welcher sich das Zylindergehäuse (42) abstützt und dass insbesondere sich das Zylindergehäuse (42) mit einem Stützelement (212) an der Stirnseite (214) der Einstellhülse (94) abstützt.

2. Hydraulische Zweiradbremseinheit nach Anspruch 1, **dadurch gekennzeichnet, dass** die Einstellhülse (94) in der Hülsenaufnahme (92) um eine zur Einstellrichtung parallele Drehachse (132) drehbar ist, dass insbesondere die Einstellhülse (94) durch zusammenwirkende Gewindeelemente (144, 146, 154, 156, 164, 166) in der Einstellrichtung (132) relativ zu der Klemmhalterung (86) bewegbar ist, und dass insbesondere die Klemmhaltung (86) im Bereich der Hülsenaufnahme (92) Gewindeelemente (144, 146, 154, 156) trägt, die mit Gewindeelementen (164, 166) der Einstellhülse (94) in Eingriff stehen.

3. Hydraulische Zweiradbremseinheit nach Anspruch 2, **dadurch gekennzeichnet, dass** die Hülsenaufnahme (92) an der Einstellhülse (94) zugewandten Führungsflächen (152) die Gewindeelemente (144, 146, 154, 156) trägt und dass insbesondere die Einstellhülse (94) an einer der Klemmhalterung (86) zugewandten Hülsenaußenseite (158) die Gewindeelemente (164, 166) trägt.

4. Hydraulische Zweiradbremseinheit nach einem der Ansprüche 2 bis 3, **dadurch gekennzeichnet, dass** die Gewindeelemente (144, 146, 154, 156, 164, 166) als Gewindegangsegmente ausgebildet sind.

5. Hydraulische Zweiradbremseinheit nach einem der voranstehenden Ansprüche, **dadurch gekennzeichnet, dass** mit der Klemmhalterung (86) die Einstellhülse (94) in der Hülsenaufnahme (92) gegen Bewegungen relativ zu der Klemmhalterung durch Kraftschluss unbeweglich festlegbar ist.

6. Hydraulische Zweiradbremseinheit nach einem der voranstehenden Ansprüche, **dadurch gekennzeichnet, dass** das Zylindergehäuse (42) mittels einer Gehäuseaußenfläche (204) in der Gehäuseaufnahme (202) gehalten ist und dass insbesondere das Zylindergehäuse (42) eine mit der Gehäuseaußenfläche (204) an einer Hülseninnenseite (202) der Einstellhülse (94) anliegt.

7. Hydraulische Zweiradbremseinheit nach einem der voranstehenden Ansprüche, **dadurch gekennzeichnet, dass** das Zylindergehäuse (42) relativ zur Einstellhülse um eine zur Hubrichtung (48) der Nehmerzylindereinheit (22) parallele Drehachse (132) drehbar ist.

8. Hydraulische Zweiradbremseinheit nach einem der voranstehenden Ansprüche, **dadurch gekennzeichnet, dass** das Zylindergehäuse (42) in der Gehäuseaufnahme (202, 214, 216) der Einstellhülse (94) durch die auf die Einstellhülse (94) wirkende Klemmhalterung (86) durch Kraftschluss unbeweglich festlegbar ist.

9. Hydraulische Zweiradbremseinheit nach einem der voranstehenden Ansprüche, **dadurch gekennzeichnet, dass** die Einstellhülse (94) eine geschlitzte Hülse ist und dass insbesondere die Einstellhülse (94) ein Basissegment (172) aufweist, an welches sich zum Schlitz (186) hin erstreckende Bogensegmente (174, 176) anschließen.

10. Hydraulische Zweiradbremseinheit nach einem der voranstehenden Ansprüche, **dadurch gekennzeichnet, dass** die Einstellhülse (94) einen Griffnocken (222) aufweist und dass insbesondere der Griffnocken an das Basissegment (172) angeformt ist.

11. Hydraulische Zweiradbremseinheit nach einem der voranstehenden Ansprüche, **dadurch gekennzeichnet, dass** das Stützelement (212) durch eine Bremsbackenführung (68) des Zylindergehäuses (42) gebildet ist.

12. Hydraulische Zweiradbremseinheit nach einem der voranstehenden Ansprüche, **dadurch gekennzeichnet, dass** die Einstellhülse (94) zwischen dem Stützelement (212) des Zylindergehäuses (42) und einem Anschlussabschnitt (218) des Zylindergehäuses (42) für eine Bremsleitung angeordnet ist.

13. Hydraulische Zweiradbremseinheit nach einem der voranstehenden Ansprüche, **dadurch gekennzeichnet, dass** mit der Klemmhalterung (86) eine Klemmkraft auf die Einstellhülse (94) wirkt, welche die Einstellhülse (94) gegen eine Bewegung relativ zur Klemmhalterung kraftschlüssig fixiert.

14. Hydraulische Zweiradbremseinheit nach einem der voranstehenden Ansprüche, **dadurch gekennzeichnet, dass** die Einstellhülse (94) mit einer Klemmkraft auf das Zylindergehäuse (42) wirkt, welche eine Relativbewegung des Zylindergehäuses (42) zur Einstellhülse (94) verhindert.

## Claims

1. Hydraulic brake unit (10) for a two-wheeled vehicle comprising slave cylinder holders (24) for hydraulic slave cylinder units (22) each bearing a brake shoe, said slave cylinder holders being mountable on a frame (16) for a two-wheeled vehicle on opposite sides of a wheel (12), wherein each of the slave cylinder holders (24) is provided with a clamp mounting (86), each comprising a base element (82) and a clamping element (84), and with a housing holding element (94) for a cylinder housing (42) of the respective slave cylinder unit (22), said housing holding element being held by the clamp mounting (86), wherein the housing holding element (94) comprises an adjusting sleeve (94) with a housing receptacle (202, 214, 216), the cylinder housing (42) being held in said receptacle, said adjusting sleeve being guided in a sleeve receptacle (92) formed by the clamp mounting (86) for movement in an adjusting direction (132) parallel to a lifting direction (48) of the slave cylinder unit (22),
**characterized in that** the adjusting sleeve (94) has an end face (214) supporting the cylinder housing (42) and that, in particular, the cylinder housing (42) is supported on the end face (214) of the adjusting sleeve (94)by a supporting element (212).

2. Hydraulic brake unit for a two-wheeled vehicle as defined in claim 1, **characterized in that** the adjusting sleeve (94) is rotatable in the sleeve receptacle (92) about an axis of rotation (132) parallel to the adjusting direction, that the adjusting sleeve (94) is movable in the adjusting direction (132) relative to the clamp mounting (86), in particular, by way of interacting thread elements (144, 146, 154, 156, 164, 166), and that the clamp mounting (86) bears, in particular, in the region of the sleeve receptacle (92) thread elements (144, 146, 154, 156) engaging with thread elements (164, 166) of the adjusting sleeve (94).

3. Hydraulic brake unit for a two-wheeled vehicle as defined in claim 2, **characterized in that** the sleeve receptacle (92) bears the thread elements (144, 146, 154, 156) on guide surfaces (152) facing the adjusting sleeve (94) and that the adjusting sleeve (94) bears the thread elements (164, 166), in particular, on an outer side (158) of the sleeve facing the clamp mounting (86).

4. Hydraulic brake unit for a two-wheeled vehicle as defined in either one of claims 2 to 3, **characterized in that** the thread elements (144, 146, 154, 156, 164, 166) are designed as thread pitch segments.

5. Hydraulic brake unit for a two-wheeled vehicle as defined in any one of the preceding claims, **characterized in that** with the clamp mounting (86) the adjusting sleeve (94) is securable in the sleeve receptacle (92) by way of force locking so as to be immovable with respect to movements relative to the clamp mounting.

6. Hydraulic brake unit for a two-wheeled vehicle as defined in any one of the preceding claims, **characterized in that** the cylinder housing (42) is held in the housing receptacle (202) by means of an outer surface (204) and that the cylinder housing (42) abuts on an inner side (202) of the adjusting sleeve (94), in particular, with the outer surface (204) of the housing.

7. Hydraulic brake unit for a two-wheeled vehicle as defined in any one of the preceding claims, **characterized in that** the cylinder housing (42) is rotatable relative to the adjusting sleeve about an axis of rotation (132) parallel to the lifting direction (48) of the slave cylinder unit (22).

8. Hydraulic brake unit for a two-wheeled vehicle as defined in any one of the preceding claims, **characterized in that** the cylinder housing (42) is securable in the housing receptacle (202, 214, 216) of the adjusting sleeve (94) by way of force locking so as to be immovable due to the clamp mounting (86) acting on the adjusting sleeve (94).

9. Hydraulic brake unit for a two-wheeled vehicle as defined in any one of the preceding claims, **characterized in that** the adjusting sleeve (94) is a slit sleeve and that the adjusting sleeve (94) has, in particular, a base segment (172) adjoining arc segments (174, 176) extending towards the slit (186).

10. Hydraulic brake unit for a two-wheeled vehicle as defined in any one of the preceding claims, **characterized in that** the adjusting sleeve (94) has a gripping lobe (222) and that the gripping lobe is integrally formed, in particular, on the base segment (172).

11. Hydraulic brake unit for a two-wheeled vehicle as defined in any one of the preceding claims, **characterized in that** the supporting element (212) is formed by a brake shoe guide (68) of the cylinder housing (42).

12. Hydraulic brake unit for a two-wheeled vehicle as defined in any one of the preceding claims, **characterized in that** the adjusting sleeve (94) is arranged between the supporting element (212) of the cylinder housing (42) and an attachment section (218) of the cylinder housing (42) for a brake line.

13. Hydraulic brake unit for a two-wheeled vehicle as defined in any one of the preceding claims, **characterized in that** with the clamp mounting (86) a clamping force acts on the adjusting sleeve (94) for fixing the adjusting sleeve (94) in a force-locking manner against any movement relative to the clamp mounting.

14. Hydraulic brake unit for a two-wheeled vehicle as defined in any one of the preceding claims, **characterized in that** the adjusting sleeve (94) acts on the cylinder housing (42) with a clamping force preventing any relative movement of the cylinder housing (42) relative to the adjusting sleeve (94).

## Revendications

1. Unité de freinage hydraulique pour véhicule à deux roues (10), comportant des éléments de retenue de cylindre récepteur (24) pouvant être montés sur les faces opposées d'une roue (12) sur un cadre de véhicule à deux roues (16) pour des unités hydrauliques cylindre récepteur (22) portant chacune une mâchoire de frein, dans laquelle chacun des éléments de retenue de cylindre récepteur (24) sont pourvus d'un élément de retenue de serrage (86), comportant chacun un élément de base (82) et un élément de serrage (84), et d'un élément de retenue de boîtier (94) retenu par l'élément de retenue de serrage (86) pour un boîtier de cylindre (42) de l'unité cylindre récepteur (22) respective, dans laquelle l'élément de retenue de boîtier (94) comporte un manchon de réglage (94), qui comprend un logement de boîtier (202, 214, 216), dans lequel le boîtier de cylindre (42) est retenu, et qui est guidé da manière mobile dans un logement de manchon (92) formé par l'élément de retenue de serrage (86) dans une direction de réglage (132) parallèle à une direction de levage (48) de l'unité cylindre récepteur (22),
**caractérisée en ce que** le manchon de réglage (94) comprend une face frontale (214), sur laquelle s'appuie le boîtier de cylindre (42) et **en ce que**, en particulier, le boîtier de cylindre (42) s'appuie au moyen d'un élément d'appui (212) sur la face frontale (214) du manchon de réglage (94).

2. Unité de freinage hydraulique pour véhicule à deux roues selon la revendication 1, **caractérisée en ce que** le manchon de réglage (94) peut tourner dans le logement de manchon (92) autour d'un axe de rotation (132) parallèle à la direction de réglage, **en ce que** le manchon de réglage (94) peut en particulier être déplacé par rapport à l'élément de retenue de serrage (86) dans la direction de réglage (132) au moyen d'éléments filetés (144, 146, 154, 156, 164, 166) en coopération, et **en ce que**, en particulier, l'élément de retenue de serrage (86) porte dans la zone du logement de manchon (92) des éléments filetés (144, 146, 154, 156), qui sont en prise avec des éléments filetés (164, 166) du manchon de réglage (94).

3. Unité de freinage hydraulique pour véhicule à deux roues selon la revendication 2, **caractérisée en ce que** le logement de manchon (92) porte sur des surfaces de guidage (152) tournées vers le manchon de réglage (94) les éléments filetés (144, 146, 154, 156) et **en ce que**, en particulier, le manchon de réglage (94) porte sur une face extérieure de manchon (158) tournée vers l'élément de retenue de serrage (86) les éléments filetés (164, 166).

4. Unité de freinage hydraulique pour véhicule à deux roues selon l'une quelconque des revendications 2 à 3, **caractérisée en ce que** les éléments filetés (144, 146, 154, 156, 164, 166) sont réalisés sous la forme de segments de pas de filetage.

5. Unité de freinage hydraulique pour véhicule à deux roues selon l'une quelconque des revendications précédentes, **caractérisée en ce que** le manchon de réglage (94) peut être fixé immobile par force dans le logement de manchon (92) à l'encontre de mouvements par rapport à l'élément de retenue de serrage au moyen de l'élément de retenue de serrage (86).

6. Unité de freinage hydraulique pour véhicule à deux roues selon l'une quelconque des revendications précédentes, **caractérisée en ce que** le boîtier de cylindre (42) est retenu dans le logement de boîtier (202) au moyen d'une surface extérieure de boîtier (204) et **en ce que**, en particulier, le boîtier de cylindre (42) s'applique par la surface extérieure de boîtier (204) sur une face intérieure de manchon (202) du manchon de réglage (94).

7. Unité de freinage hydraulique pour véhicule à deux roues selon l'une quelconque des revendications précédentes, **caractérisée en ce que** le boîtier de cylindre (42) peut être amené en rotation par rapport au manchon de réglage autour d'un axe de rotation (132) parallèle à la direction de levage (48) de l'unité cylindre récepteur (22).

8. Unité de freinage hydraulique pour véhicule à deux roues selon l'une quelconque des revendications précédentes, **caractérisée en ce que** le boîtier de cylindre (42) peut être fixé immobile par force dans le logement de boîtier (202, 214, 216) du manchon de réglage (94) au moyen de l'élément de retenue de serrage (86) agissant sur le manchon de réglage (94).

9. Unité de freinage hydraulique pour véhicule à deux roues selon l'une quelconque des revendications précédentes, **caractérisée en ce que** le manchon de réglage (94) est un manchon fendu et **en ce que**, en particulier, le manchon de réglage (94) comprend un segment de base (172) auquel se raccordent des segments d'arc (174, 176) s'étendant en direction de la fente (186).

10. Unité de freinage hydraulique pour véhicule à deux roues selon l'une quelconque des revendications précédentes, **caractérisée en ce que** le manchon de réglage (94) comprend une came de préhension (222) et **en ce que**, en particulier, la came de préhension est formée sur le segment de base (172).

11. Unité de freinage hydraulique pour véhicule à deux roues selon l'une quelconque des revendications précédentes, **caractérisée en ce que** l'élément d'appui (212) est formé par un guidage de mâchoire de frein (68) du boîtier de cylindre (42).

12. Unité de freinage hydraulique pour véhicule à deux roues selon l'une quelconque des revendications précédentes, **caractérisée en ce que** le manchon de réglage (94) est agencé entre l'élément d'appui (212) du boîtier de cylindre (42) et une section de raccordement (218) du boîtier de cylindre (42) pour une conduite de frein.

13. Unité de freinage hydraulique pour véhicule à deux roues selon l'une quelconque des revendications précédentes, **caractérisée en ce qu'**une force de serrage, laquelle fixe par force le manchon de réglage (94) à l'encontre d'un mouvement par rapport à l'élément de retenue de serrage, agit au moyen de l'élément de retenue de serrage (86) sur le manchon de réglage (94).

14. Unité de freinage hydraulique pour véhicule à deux roues selon l'une quelconque des revendications précédentes, **caractérisée en ce que** le manchon de réglage (94) agit sur le boîtier de cylindre (42) avec une force de serrage qui empêche un mouvement relatif du boîtier de cylindre (42) par rapport au manchon de réglage (94).
